# EUROPÄISCHE PATENTSCHRIFT

(11) **EP 3 320 220 B1**
(45) Veröffentlichungstag und Bekanntmachung des Hinweises auf die Patenterteilung: **28.02.2024**
(21) Anmeldenummer: 16728300.1
(22) Anmeldetag: 09.06.2016
(51) Int. Cl.: F16B 37/04

(54) **BEFESTIGER FÜR EINE MONTAGESCHIENE**
FASTENER FOR A MOUNTING RAIL
ÉLÉMENT DE FIXATION POUR UN RAIL DE MONTAGE

(30) Priorität: 10.07.2015 DE 102015111184; 11.05.2016 DE 102016108697
(43) Veröffentlichungstag der Anmeldung: 16.05.2018
(73) Patentinhaber: fischerwerke GmbH & Co. KG, 72178 Waldachtal (DE)
(72) Erfinder: LINKA, Martin, 72160 Horb a.N. (DE); FÖRMER, Thomas, 72160 Horb-Bildechingen (DE)
(86) Internationale Anmeldenummer: PCT/EP2016/063087
(87) Internationale Veröffentlichungsnummer: WO 2017/008958

(56) Entgegenhaltungen:
- DE-A1- 4 243 185
- JP-U- H0 729 315
- US-A- 3 493 025
- US-A- 4 645 393
- US-A- 5 067 863
- US-A- 5 209 619
- US-A1- 2003 185 643

## Beschreibung

Die Erfindung betrifft einen Befestiger und eine Montageschiene mit den Merkmalen des Oberbegriffs des Anspruchs 1.

Montageschienen werden üblicherweise horizontal oder vertikal an Wänden oder an Decken, auch abgehängt unter Decken, befestigt und dienen ihrerseits zur Befestigung von beispielsweise Rohren, Kabeln und Sonstigem. Die Montageschienen sind typischerweise rechteckrohrförmig mit einem längs durchgehenden Schlitz auf einer Seite und Löchern und/oder Langlöchern auf einer gegenüberliegenden Seite. An Rändern beiderseits des Schlitzes kann die Montageschiene nach innen stehende Stege aufweisen. Der Schlitz dient zum Einsetzen eines Befestigers in die Montageschiene. Der Befestiger dient zur Befestigung von beispielsweise Rohr- oder Kabelschellen, Anbauteilen oder Verbindungselementen an der Montageschiene.

Die Offenlegungsschrift DE 10 2007 014 795 A1 offenbart einen Befestiger für eine Montageschiene, der ein in Ansicht in etwa rechteckiges Hintergreifteil mit einem Gewindeloch in einer Mitte aufweist. Das Hintergreifteil kann auch als Rechteckmutter aufgefasst werden. Das Hintergreifteil ist schmaler und länger als ein Schlitz einer Montageschiene, so dass es in Längsrichtung zur Montageschiene ausgerichtet durch den Schlitz in die Montageschiene eingebracht und durch eine Drehung in der Montageschiene in eine die Montageschiene von innen seitlich des Schlitzes hintergreifende Hintergriffstellung bringbar ist.

Ein weiterer Befestiger ist aus der US 3 493 025 A bekannt.

Des Weiteren weist der bekannte Befestiger einen Halter aus Kunststoff auf, der eine Aufnahmeöffnung für das Hintergreifteil aufweist und der den Schlitz der Montageschiene durchgreift, wenn der Befestiger in vorgesehener Weise an der Montageschiene angeordnet ist. Mit dem Halter wird das Hintergreifteil in die Montageschiene eingebracht und in der Montageschiene in die Hintergriffstellung gedreht. Der bekannte Halter weist zwei bogenförmige und mit dem Halter einstückige Streifen auf, die seitlich des Schlitzes außen auf der Montageschiene aufliegen, wenn der Befestiger in vorgesehener Weise an der Montageschiene angeordnet ist. Durch ihre Bogenform federn die Streifen nach Art von Blattfedern und beaufschlagen das Hintergreifteil von innen gegen die Montageschiene, damit der Befestiger gegen unbeabsichtigte Verschiebung gehalten ist. Die Montageschiene weist auf ihrer Außenseite seitlich des Schlitzes in Längsrichtung verlaufende, stufenförmige Vertiefungen für die Aufnahme der bogenförmigen, federnden Streifen auf, so dass ein Anbauteil, das mit dem Befestiger an der Montageschiene befestigt ist, seitlich der Vertiefungen außen an einer Anlagefläche der Montageschiene anliegt, ohne Zwischenlage der bogenförmigen und federnden Streifen. Mit einer "Anlagefläche" ist hier stets mindestens eine Fläche gemeint, die eine Tangentialebene am Umfang des Profils der Montageschiene bildet. Die Einbringrichtung des Befestigers in den Schlitz ist zu der Anlagefläche orthogonal und derart gestaltet, dass an der Anlagefläche ein ebenes Anbauteil anliegt.

Aufgabe der Erfindung ist, einen Befestiger für eine Montageschiene vorzuschlagen, der nicht zwischen ein Anbauteil, das mit dem Befestiger an der Montageschiene befestigt ist, und die Montageschiene greift, so dass das Anbauteil unmittelbar seitlich eines Schlitzes außen an der Montageschiene anliegt, ohne dass dafür eine spezielle Montageschiene notwendig ist.

Gelöst wird diese Aufgabe durch die Merkmale des Anspruchs 1. Der erfindungsgemäße Befestiger mit den Merkmalen des Anspruchs 1 weist ein Hintergreifteil mit einem Gewinde auf, wobei das Hintergreifteil schmaler und länger als ein Schlitz einer Montageschiene breit ist, so dass das Hintergreifteil in Längsrichtung der Montageschiene ausgerichtet durch den Schlitz in die Montageschiene einbringbar und durch eine Drehung um eine Längsachse des Befestigers in der Montageschiene schräg- oder quergestellt werden kann, so dass das Hintergreifteil die Montageschiene von innen seitlich des Schlitzes hintergreift. Unabhängig von einer Montageschiene bedeutet "schmaler und länger als der Schlitz der Montageschiene breit", dass das Hintergreifteil radial zu einer Achse ihres Gewindes, die der Längsachse des Befestigers entspricht, in einer Richtung länger als quer zu dieser Richtung ist, wobei "quer" insbesondere orthogonal bedeutet. Zur Befestigung eines Anbauteils an einer Anlagefläche außen an der Montageschiene weist das Hintergreifteil das Gewinde auf, wobei das Gewinde ein Innengewinde eines Gewindelochs oder ein Außengewinde an einem Schaft oder dgl. des Hintergreifteils sein kann. Im Falle eines Gewindelochs kann das Hintergreifteil auch als Mutter aufgefasst werden, die länger als breit ist, im Falle eines Schafts mit einem Außengewinde kann das Hintergreifteil auch als Hammerkopfschraube aufgefasst werden.

Des Weiteren weist der erfindungsgemäße Befestiger einen Halter auf, der das Hintergreifteil hält und mit dem das Hintergreifteil durch den Schlitz in die Montageschiene einbringbar und in der Montageschiene durch Drehung um die Längsachse des Befestigers in die Hintergriffstellung schräg- oder querstellbar ist. Das Hintergreifteil steht hierzu mit seiner längeren Seite in - bezogen auf die Längsachse des Befestigers - radialer Richtung über den Halter über. Am Halter sind zwei Widerlager einander gegenüber angeordnet, die in gleichen Richtungen, radial zur Längsachse des Befestigers, seitlich vom Halter abstehen, wie das Hintergreifteil vom Halter übersteht. Anders ausgedrückt stehen die Widerlager in parallele radiale Richtungen bezüglich einer Achse des Gewindes des Hintergreifteils wie das Hintergreifteil vom Halter übersteht. Die Widerlager sind axial in Bezug auf das Gewinde des Hintergreifteils, also in Richtung der Längsachse des Befestigers, versetzt zum Hintergreifteil am Halter angeordnet. Die Widerlager des Halters übergreifen die Anlagefläche der Montageschiene außen seitlich des Schlitzes, wenn der Befestiger wie vorgesehen an der Montageschiene angeordnet ist und sich das Hintergreifteil in der die Montageschiene innen seitlich des Schlitzes hintergreifenden Hintergriffstellung befindet, jedoch noch kein Anbauteil über den Befestiger mit der Montageschiene verbunden ist, der Befestiger sich also in einer Vormontagestellung befindet. In dieser Vormontagestellung hält also der Halter des erfindungsgemäßen Befestigers den Befestiger einschließlich seines Hintergreifteils an der Montageschiene, indem das Hintergreifteil in der Hintergriffstellung die Montageschiene innen seitlich des Schlitzes hintergreift und die Widerlager die Montageschiene außen seitlich des Schlitzes übergreifen, dabei über die Anlagefläche der Montageschiene überstehen und insbesondere an der Anlagefläche der Montageschiene anliegen.

Erfindungsgemäß sind die Widerlager am Halter aufeinander zu beweglich, so dass sich ein Abstand der Widerlager voneinander verkleinern lässt. Wird der Halter in die Montageschiene hinein beaufschlagt, bewegen sich die Widerlager aufeinander zu und gelangen dadurch in den Schlitz der Montageschiene hinein, so dass sie nicht auf einer Außenseite der Montageschiene aufliegen. Die Beaufschlagung des Halters des erfindungsgemäßen Befestigers in die Montageschiene hinein erfolgt beispielsweise durch ein Anbauteil, das mit dem erfindungsgemäßen Befestiger an der Montageschiene befestigt und auf der Seite des Schlitzes außen gegen die Anlagefläche der Montageschiene gespannt wird. Das Anbauteil drückt in diesem Fall zunächst gegen die an der Montageschiene außen über die Anlagefläche überstehenden Widerlager, die durch den Druck aufeinander zu und in den Schlitz der Montageschiene hinein bewegt werden, so dass die Widerlager und auch kein sonstiges Element des Halters oder Befestigers zwischen das Anbauteil und die Montageschiene greifen, so dass das Anbauteil unmittelbar außen seitlich neben dem Schlitz auf der Anlagefläche der Montageschiene anliegt. Die Beweglichkeit der Widerlager ermöglicht eine große Maß- und Formtoleranz sowohl der Widerlager des Halters als auch der Montageschiene und ihres Schlitzes.

Die Erfindung ermöglicht eine Herstellung des Halters des Befestigers beispielsweise aus Kunststoff, ohne dass ein "Kriechen" des Kunststoffs zu besorgen ist. Mit "Kriechen" ist eine langsame plastische Verformung unter mechanischer Dauerbeanspruchung gemeint, hier insbesondere von Kunststoff, der zwischen der Montageschiene und einem Anbauteil eingespannt ist. Weil sich die Widerlager des Halters des erfindungsgemäßen Befestigers bei der Montage eines Anbauteils in den Schlitz der Montageschiene hineinbewegen und dabei die Anlagefläche der Montageschiene zur direkten Anlage des Anbauteils freigeben, erfordert die Erfindung keine spezielle Montageschiene.

Vorzugsweise federn die Widerlager des Halters des erfindungsgemäßen Befestigers in einer Bewegungsrichtung der Widerlager, sie lassen sich federnd bzw. durch elastische Verformung in den Schlitz der Montageschiene hineinbewegen. So lange der Halter nicht in die Montageschiene hinein beaufschlagt wird, hält eine Federkraft die Widerlager außen in der die Montageschiene seitlich des Schlitzes übergreifenden Stellung, in der die Widerlager über die Anlagefläche der Montageschiene überstehen.

Eine Ausgestaltung der Erfindung sieht vor, dass der Halter in einer Achsrichtung des Gewindes des Hintergreifteils bzw. in Richtung der Längsachse des Befestigers federt, so dass der Halter das Hintergreifteil federnd von innen gegen die Montageschiene beaufschlagt, wenn sich das Hintergreifteil in der Hintergriffstellung befindet. Dadurch wird die Montageschiene zwischen dem Hintergreifteil auf der Innenseite der Montageschiene und den Widerlagern auf der Außenseite der Montageschiene, die insbesondere an der Anlagefläche anliegen, festgeklemmt und der Befestiger gegen unbeabsichtigtes Verschieben in Längsrichtung an der Montageschiene gehalten. Der Befestiger lässt sich durch Überwinden einer Klemmkraft in Längsrichtung der Montageschiene an eine gewünschte Position verschieben. Eine endgültige Festlegung des Befestigers an der Montageschiene erfolgt durch Festspannen eines Anbauteils an dem Befestiger mit beispielsweise einer in ein Innengewinde des Hintergreifteils eingeschraubten Schraube oder einer auf ein Außengewinde an einem Schaft des Hintergreifteils geschraubten Mutter.

Eine Ausführungsform der Erfindung sieht vor, dass die Widerlager von einander abgewandten Außenseiten von Federelementen, insbesondere Federzungen, des Halters abstehen. Die Federelemente befinden sich außerhalb einer Mantelfläche des Gewindes des Hintergreifteils, so dass beispielsweise ein Schaft einer Schraube zwischen den Federelementen durch in das Gewinde des Hintergreifteils schraubbar ist. Die Federelemente erstrecken sich von den Widerlagern in Richtung des Hintergreifteils und gehen an den Widerlagern fernen Enden einstückig in den Halter über. Dies ermöglicht eine einstückige Herstellung des Halters mit den Widerlagern in einem Arbeitsschritt durch Spritzgießen aus Kunststoff, wobei die Erfindung weder auf diesen Werkstoff noch auf die Herstellung durch Spritzgießen beschränkt ist.

Eine Ausgestaltung der Erfindung sieht vor, dass die Widerlager Schrägflächen an einander abgewandten und dem Hintergreifteil zugewandten Seiten aufweisen. Ist der erfindungsgemäße Befestiger wie vorgesehen an einer Montageschiene angeordnet, wobei sich das Hintergreifteil in der Hintergriffstellung in der Montageschiene befindet, liegen die Schrägflächen im Bereich eines Übergangs einer die Anlagefläche bildenden Außenseite der Montageschiene in den Schlitz an der Montageschiene an und halten den Befestiger an der Montageschiene. Durch ihre Schrägstellung drückt die Montageschiene die Widerlager nach innen, wenn ein Anbauteil montiert und dabei der Halter in die Montageschiene hinein beaufschlagt wird. D.h. die Widerlager gelangen in den Schlitz der Montageschiene, wenn ein Anbauteil mit dem Befestiger an der Montageschiene befestigt und dazu von außen gegen die Montageschiene gespannt wird.

Die Erfindung wird nachfolgend anhand eines in der Zeichnung dargestellten Ausführungsbeispiels näher erläutert. Es zeigen:
- Figur 1: eine Stirnansicht eines erfindungsgemäßen Befestigers;
- Figur 2: den Befestiger aus Figur 1 in Seitenansicht; und
- Figur 3: den Befestiger aus Figuren 1 und 2 in einem gegenüber Figur 2 um 90 Grad gedrehten Achsschnitt in einer Montageschiene.

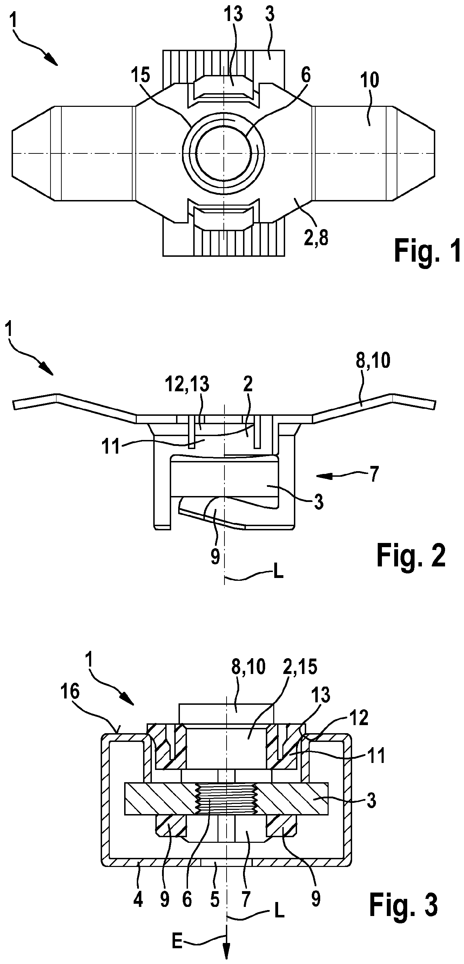

Der in der Zeichnung dargestellte, erfindungsgemäße Befestiger 1 weist einen Halter 2 und ein Hintergreifteil 3 auf und ist zur Verbindung zweier Montageschienen 4 oder zur Befestigung eines Anbauteils wie beispielsweise einer Rohr- oder einer Kabelschelle an der Montageschiene 4 vorgesehen. Die Montageschiene 4, die in Figur 3 gezeichnet ist, weist einen flachen Rechteckquerschnitt und einen in Längsrichtung durchgehenden Schlitz auf einer Flachseite auf, die eine Anlagefläche 16 für ein Anbauteil bildet. Dem Schlitz gegenüber weist die Montageschiene 4 abwechselnd Lang- und Rundlöcher 5 zur Befestigung der Montageschiene 4 an beispielsweise einer Decke oder einer Wand auf. Der Halter 2 besteht aus Kunststoff und das Hintergreifteil 3 aus Metall, insbesondere aus Stahl. Die Materialwahl für den Halter 2 und das Hintergreifteil 3 ist nicht zwingend für die Erfindung.

Das Hintergreifteil 3 ist in Ansicht rechteckig und weist ein Gewindeloch 6 mit einem Innengewinde in seiner Mitte auf, das allgemein auch als Gewinde aufgefasst werden kann. Das Gewindeloch 6 erstreckt sich in Richtung der Längsachse L des Befestigers 1. Das Hintergreifteil 3 kann auch als Rechteckmutter aufgefasst werden. Anstelle einer Mutter ist auch die Verwendung einer Hammerkopfschraube mit einem Schaft mit Außengewinde als Hintergreifteil denkbar (nicht dargestellt). Das Hintergreifteil 3 ist schmaler und länger als der Schlitz der Montageschiene 4 breit ist und das Hintergreifteil 3 ist kürzer als eine Innenbreite der Montageschiene 4. Das Hintergreifteil 3 lässt sich dadurch in Längsrichtung der Montageschiene 4 ausgerichtet durch den Schlitz in Einbringrichtung E, d.h. in einer zur Längsachse L des Befestigers 1 parallelen oder mit ihr identischen Richtung, in die Montageschiene 4 einbringen und durch Drehung in der Montageschiene 4 quer- oder schrägstellen, so dass es die Montageschiene 4 von innen beiderseits seitlich des Schlitzes hintergreift, wie es in Figur 3 zu sehen ist.

Der Halter 2 weist einen kurzen Schaft 7 mit zylindrischer Mantelfläche und einem länglichen Flansch 8 an einer Stirnseite des Schafts 7 auf. Mit "kurz" ist gemeint, dass der Schaft 7 nicht länger als sein Durchmesser ist. Ein Durchmesser des Schafts 7 ist nicht größer als eine Breite des Schlitzes der Montageschiene 4, so dass der Schaft 7 in den Schlitz der Montageschiene 4 einbringbar ist. Der Schaft 7 weist eine radial durchgehende Öffnung als Aufnahme des Hintergreifteils 3 mit axialem Abstand vom Flansch 8 auf. Ein Querschnitt der die Aufnahme bildenden Öffnung ist kongruent zu einem Querschnitt des Hintergreifteils 3. Das Hintergreifteil 3 steht bezogen auf die Längsachse L des Befestigers radial auf beiden Seiten aus dem Schaft 7 vor. Das Hintergreifteil 3 ist in diesem Fall quer, hier orthogonal zu dem länglichen Flansch 8 angeordnet und steht an Längsseiten des Flanschs 8 aus dem Schaft 7 vor. Auf einer dem Flansch 8 abgewandten Seite des Hintergreifteils 3 weist der Schaft 7 zwei elastische Federfinger 9 auf, die sich in Umfangsrichtung erstrecken und die das Hintergreifteil 3 elastisch federnd in Richtung des Flanschs 8 beaufschlagen. Der Halter 2 weist ein koaxiales Durchgangsloch 15 auf, dessen Durchmesser größer als ein Außendurchmesser des Gewindes des Hintergreifteils 3 ist.

Der Flansch 8 weist zwei Laschen 10 auf, die von der Seite gesehen (Figur 2) stumpfwinklig abgewinkelt sind und in entgegengesetzten Richtungen abstehen. Die Laschen 10 dienen einer Handhabung des Befestigers 1.

An den Längsseiten des Flanschs 8 weist der Halter 2 zwei einander gegenüber angeordnete Federelemente 11 in Form von Federzungen auf, die achsparallel zum Schaft 7 an dessen Umfang angeordnet sind. Die Federelemente 11 befinden sich außerhalb einer Mantelfläche des Gewindes des Hintergreifteils 3. An dem Hintergreifteil 3 zugewandten Enden gehen die Federzungen 11 einstückig in den Schaft 7 über. Die Federelemente 11 federn bezogen auf die Längsachse L in radialer Richtung, d. h. zusammen und auseinander und in Längsrichtung des Hintergreifteils 3, in der das Hintergreifteil 3 radial über den Halter 2 übersteht. Die Federelemente 11 enden mit freien Enden bündig mit dem Flansch 8 und weisen an oder nahe an ihren freien Enden an einander abgewandten Außenseiten Schrägflächen 12 auf, die dem Hintergreifteil 3 zugewandt sind. Die freien Enden der Federelemente 11 mit den Schrägflächen 12 können auch als Widerlager 13 des Halters 2 aufgefasst werden. Die Widerlager 13 sind in Längsrichtung des Hintergreifteils 3, also in den Richtungen, in die das Hintergreifteil 3 über den Schaft 7 übersteht, aufeinander zu und voneinander weg beweglich und federnd in diesen Richtungen.

Zur Befestigung an der Montageschiene 4 wird der Befestiger 1 an den Laschen 10 seines Halters 2 gegriffen und der längliche Halter 10 quer und damit das Hintergreifteil 3 längs zur Montageschiene 4 ausgerichtet. Mit dieser Ausrichtung lässt sich das Hintergreifteil 3 am Halter 2 durch den Schlitz in die Montageschiene 4 einbringen. Durch eine Drehung um 90 Grad wird das Hintergreifteil 3 in der Montageschiene 4 quer in eine in Figur 3 gezeigte Hintergriffstellung gestellt, in der das Hintergreifteil 3 die Montageschiene 4 innen seitlich des Schlitzes hintergreift. Die Widerlager 13 liegen mit ihren Schrägflächen 12 elastisch federnd an einer Außenseite der Montageschiene 4 seitlich des Schlitzes an der Montageschiene 4 an. Die Schrägflächen 12 der Widerlager 13 liegen im Bereich eines Übergangs von der Anlagefläche 16 der Montageschiene 4 in den Schlitz an, derart, dass die dem Hintergreifteil 3 abgewandten Seiten der Widerlager 13 in Richtung der Längsachse des Befestigers 1 über die Anlagefläche 16 überstehen. Eine Federkraft der Federelemente 11 der Widerlager 13 und eine Federkraft der Federfinger 9 des Schafts 7, die das Hintergreifteil 3 in Richtung des Flanschs 8 beaufschlagt, klemmt den Befestiger 1 an der Montageschiene 4 fest. Eine Klemmkraft ist so hoch, dass sich auch bei einer senkrecht an einer Wand befestigten Montageschiene 4 der Befestiger 1 nicht von selbst verschiebt. Von Hand lässt sich eine Klemmkraft überwinden und der Befestiger 1 in Längsrichtung der Montageschiene 4 verschieben. Zu einer endgültigen Festlegung wird eine nicht gezeichnete Schraube durch ein Durchsteckloch in einem nicht gezeichneten Anbauteil und durch das Durchgangsloch 15 des Halters 2 in das Gewindeloch 4 des Hintergreifteils 3 geschraubt und festgezogen. Die Schraube spannt das Hintergreifteil 3 von innen gegen die Montageschiene 4 und beaufschlagt dabei den Halter 2 in die Montageschiene 4 hinein. Die Widerlager 13 werden dabei vom Anbauteil nach innen gedrückt und gelangen in den Schlitz der Montageschiene 4, so dass sie sich nicht zwischen dem Anbauteil und der Montageschiene 4 befinden. Das nicht gezeichnete Anbauteil liegt unmittelbar auf Anlagefläche 16 der Außenseite der Montageschiene 4 an.

### Bezugszeichenliste

- 1: Befestiger
- 2: Halter
- 3: Hintergreifteil
- 4: Montageschiene
- 5: Loch
- 6: Gewindeloch
- 7: Schaft
- 8: Flansch
- 9: Federfinger
- 10: Lasche
- 11: Federelement
- 12: Schrägfläche
- 13: Widerlager
- 15: Durchgangsloch
- 16: Anlagefläche
- E: Einbringrichtung
- L: Längsachse des Befestigers 1

## Patentansprüche

1. Befestiger (1) und Montageschiene (4), wobei die Montageschiene (4) einen Schlitz aufweist, wobei der Befestiger (1) ein ein Gewinde aufweisendes Hintergreifteil (3) aufweist, das schmaler und länger als der Schlitz der Montageschiene (4) breit ist, mit einem das Hintergreifteil (3) haltenden Halter (2), wobei der Halter (2) einen Schaft (7) mit zylindrischer Mantelfläche und einem länglichen Flansch (8) an einer Stirnseite des Schafts (7) aufweist, wobei die Länge des Schafts (7) nicht länger als sein Durchmesser ist, und mit zwei einander gegenüber angeordneten Widerlagern (13), die in gleichen Richtungen seitlich vom Halter (2) abstehen wie das Hintergreifteil (3) und die zu einem Übergreifen der Montageschiene (4) außen seitlich des Schlitzes vorgesehen sind, wenn der Halter (2) das Hintergreifteil (3) in einer Hintergriffstellung hält, in der sich das Hintergreifteil (3) in der Montageschiene (4) befindet und die Montageschiene (4) von innen seitlich des Schlitzes hintergreift, wobei die Widerlager (13) am Halter (2) auf einander zu beweglich sind, so dass sie sich in den Schlitz der Montageschiene (4) hineinbewegen, wenn der Halter (2) in die Montageschiene (4) hinein beaufschlagt wird,wobei in einer Vormontagestellung des Befestigers (1), in welcher noch kein Anbauteil über den Befestiger (1) mit der Montageschiene (4) verbunden ist, die Widerlager (13) des Halters (2) eine Anlagefläche (16) der Montageschiene (4) außen seitlich des Schlitzes übergreifen, wenn der Befestiger (1) wie vorgesehen an der Montageschiene (4) angeordnet ist und sich das Hintergreifteil (3) in der die Montageschiene (4) innen seitlich des Schlitzes hintergreifenden Hintergriffstellung befindet, wobei der Halter (2) des Befestigers (1) den Befestiger (1) einschließlich seines Hintergreifteils (3) an der Montageschiene (4) hält, indem das Hintergreifteil (3) in der Hintergriffstellung die Montageschiene (4) innen seitlich des Schlitzes übergreift und die Widerlager (13) die Montageschiene (4) außen seitlich des Schlitzes übergreifen, und wobei die Widerlager (13) dabei über die Anlagefläche (16) der Montageschiene (4) überstehen und insbesondere an der Anlagefläche (16) der Montageschiene (4) anliegen, wobei die Widerlager (13) an einander abgewandten Außenseiten von Federelementen (11) abstehen, die sich außerhalb einer Mantelfläche des Gewindes des Hintergreifteils (3) von den Widerlagern (13) in Richtung des Hintergreifteils (3) erstrecken und an den Widerlagern (13) fernen Enden einstückig in den Halter (2) übergehen,
**dadurch gekennzeichnet, dass** auf einer dem Flansch (8) abgewandten Seite des Hintergreifteils (3) der Schaft (7) zwei elastische Federfinger (9) aufweist, die sich in Umfangsrichtung erstrecken und die das Hintergreifteil (3) elastisch federnd in Richtung des Flanschs (8) beaufschlagen, derart dass eine Federkraft der Federelemente (11) der Widerlager (13) und eine Federkraft der Federfinger (9) des Schafts (7), die das Hintergreifteil (3) in Richtung des Flanschs (8) beaufschlagt, den Befestiger (1) an der Montageschiene (4) festklemmen.

2. Befestiger (1) nach Anspruch 1, **dadurch gekennzeichnet, dass** die Widerlager (13) in ihrer Bewegungsrichtung federn.

3. Befestiger (1) nach Anspruch 1 oder 2, **dadurch gekennzeichnet, dass** der Halter (2) in einer Achsrichtung des Gewindes des Hintergreifteils (3) federt.

4. Befestiger (1) nach einem der vorhergehenden Ansprüche, **dadurch gekennzeichnet, dass** der Halter (2) aus Kunststoff besteht.

5. Befestiger (1) nach einem der vorhergehenden Ansprüche, **dadurch gekennzeichnet, dass** die Widerlager (13) einander abgewandte und dem Hintergreifteil (3) zugewandte Schrägflächen (12) aufweisen, die im Bereich eines Übergangs von einer Außenseite der Montageschiene (4) in ihren Schlitz anliegen, wenn der Halter (2) das Hintergreifteil (3) in der Hintergriffstellung hält.

## Claims

1. Fastener (1) and mounting rail (4), the mounting rail (4) comprising a slot, the fastener (1) having a rear engagement part (3) that has a thread which is narrower and longer than the width of the slot of the mounting rail (4), comprising a holder (2) holding the rear engagement part (3), the holder (2) comprising a shaft (7) having a cylindrical lateral area and an elongate flange (8) on an end face of the shaft (7), the length of the shaft (7) being not longer than its diameter, and comprising two abutments (13) arranged opposite one another which project laterally from the holder (2) in the same directions as the rear engagement part (3) and which are provided for engaging over the mounting rail (4) on the outside at the sides of the slot when the holder (2) holds the rear engagement part (3) in a rear engagement position, in which the rear engagement part (3) is located in the mounting rail (4) and engages behind the mounting rail (4) on the inside at the sides of the slot, the abutments (13) on the holder (2) being movable toward one another such that they move into the slot of the mounting rail (4) when the holder (2) is loaded into the mounting rail (4), in a preassembly position of the fastener (1), in which an attachment is not yet connected to the mounting rail (4) via the fastener (1), the abutments (13) of the holder (2) engaging over a contact surface (16) of the mounting rail (4) on the outside at the sides of the slot when the fastener (1) as provided is arranged on the mounting rail (4) and the rear engagement part (3) is in the rear engagement position engaging behind the mounting rail (4) on the inside at the sides of the slot, the holder (2) of the fastener (1) holding the fastener (1), including its rear engagement part (3), on the mounting rail (4) by the rear engagement part (3) in the rear engagement position engaging over the mounting rail (4) on the inside at the sides of the slot and the abutments (13) engaging over the mounting rail (4) on the outside at the sides of the slot, and the abutments (13) projecting over the contact surface (16) of the mounting rail (4) and in particular resting on the contact surface (16) of the mounting rail (4), the abutments (13) projecting from outer faces, facing away from one another, of spring elements (11) which extend outside a lateral area of the thread of the rear engagement part (3) from the abutments (13) toward the rear engagement part (3) and integrally transition into the holder (2) at ends remote from the abutments (13),
**characterized in that** on a side of the rear engagement part (3) facing away from the flange (8), the shaft (7) has two resilient spring fingers (9) which extend in the peripheral direction and which load the rear engagement part (3) elastically resiliently toward the flange (8) such that a spring force of the spring elements (11) of the abutments (13) and a spring force of the spring fingers (9) of the shaft (7), which loads the rear engagement part (3) toward the flange (8), clamp the fastener (1) on the mounting rail (4).

2. Fastener (1) according to claim 1, **characterized in that** the abutments (13) are resilient in their movement direction.

3. Fastener (1) according to claim 1 or 2, **characterized in that** the holder (2) is resilient in an axial direction of the thread of the rear engagement part (3).

4. Fastener (1) according to any of the preceding claims,
**characterized in that** the holder (2) consists of plastics material.

5. Fastener (1) according to any of the preceding claims,
**characterized in that** the abutments (13) have inclined surfaces (12) facing away from one another and facing the rear engagement part (3), which surfaces, in the region of a transition from an outer side of the mounting rail (4), rest in the slot of the mounting rail when the holder (2) holds the rear engagement part (3) in the rear engagement position.

## Revendications

1. Élément de fixation (1) et rail de montage (4), dans lesquels le rail de montage (4) présente une fente, dans lesquels l'élément de fixation (1) présente une pièce de retenue arrière (3) présentant un filetage, laquelle pièce de retenue arrière est plus étroite et plus longue que la fente du rail de montage (4) n'est large et comporte un support (2) supportant la pièce de retenue arrière (3), dans lesquels le support (2) présente une tige (7) ayant une surface d'enveloppe cylindrique et une bride allongée (8) sur une face frontale de la tige (7), dans lesquels la longueur de la tige (7) n'est pas plus longue que son diamètre et comporte deux butées (13) disposées en vis-à-vis, lesquelles dépassent latéralement du support (2) dans les mêmes directions que la pièce de retenue arrière (3) et sont prévues pour un débordement du rail de montage (4) à l'extérieur latéral de la fente lorsque le support (2) maintient la pièce de retenue arrière (3) dans une position de retenue arrière dans laquelle la pièce de retenue arrière (3) se trouve dans le rail de montage (4) et le rail de montage (4) vient en prise par l'arrière depuis l'intérieur du côté de la fente, dans lesquels les butées (13) au niveau du support (2) doivent être mobiles l'une par rapport à l'autre de telle sorte qu'elles se déplacent dans la fente du rail de montage (4) lorsque le support (2) est sollicité dans le rail de montage (4), dans lesquels, dans une position de prémontage de l'élément de fixation (1) dans laquelle aucune pièce rapportée n'est encore reliée au rail de montage (4) par l'intermédiaire de l'élément de fixation (1), les butées (13) du support (2) chevauchent une surface d'appui (16) du rail de montage (4) à l'extérieur du côté de la fente lorsque l'élément de fixation (1) est disposé comme prévu sur le rail de montage (4) et la pièce de retenue arrière (3) se trouve dans la position de retenue arrière en prise par l'arrière avec le rail de montage (4) à l'intérieur du côté de la fente, dans lesquels le support (2) de l'élément de fixation (1) maintient l'élément de fixation (1), y compris sa pièce de retenue arrière (3), sur le rail de montage (4) par le fait que la pièce de retenue arrière (3), dans la position de retenue arrière, chevauche le rail de montage (4) à l'intérieur du côté de la fente et les butées (13) chevauchent le rail de montage (4) à l'extérieur du côté de la fente, et dans lesquels les butées (13) dépassent au-dessus de la surface d'appui (16) du rail de montage (4) et reposent en particulier sur la surface d'appui (16) du rail de montage (4), dans lesquels les butées (13) situées sur des côtés extérieurs opposés font saillie d'éléments élastiques (11) qui s'étendent à l'extérieur d'une surface d'enveloppe du filetage de la pièce de retenue arrière (3) à partir des butées (13) en direction de la pièce de retenue arrière (3) et se prolongent d'un seul tenant dans le support (2) aux extrémités éloignées des butées (13),
**caractérisés en ce que** la tige (7) présente deux doigts élastiques (9) sur un côté de la pièce de retenue arrière (3) opposé à la bride (8), lesquels doigts élastiques s'étendent dans la direction circonférentielle et sollicitent la pièce de retenue arrière (3) de manière élastique dans la direction de la bride (8), de telle sorte qu'une force élastique des éléments élastiques (11) des butées (13) et une force élastique des doigts élastiques (9) de la tige (7), laquelle force sollicite la pièce de retenue arrière (3) dans la direction de la bride (8), serrent fixement l'élément de fixation (1) sur le rail de montage (4).

2. Élément de fixation (1) selon la revendication 1, **caractérisé en ce que** les butées (13) font ressort dans leur direction de déplacement.

3. Élément de fixation (1) selon la revendication 1 ou 2,
**caractérisé en ce que** le support (2) fait ressort dans une direction axiale du filetage de la pièce de retenue arrière (3).

4. Élément de fixation (1) selon l'une des revendications précédentes, **caractérisé en ce que** le support (2) est en matière plastique.

5. Élément de fixation (1) selon l'une des revendications précédentes, **caractérisé en ce que** les butées (13) présentent des surfaces obliques (12) mutuellement opposées et faisant face à la pièce de retenue arrière (3), lesquelles surfaces sont situées dans la zone d'une transition d'un côté extérieur du rail de montage (4) dans sa fente, lorsque le support (2) maintient la pièce de retenue arrière (3) dans la position de retenue arrière.
